(19) Europäisches Patentamt

European Patent Office

Office européen des brevets

(11) **EP 1 472 776 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(21) Anmeldenummer: 02769863.8

(22) Anmeldetag: **29.07.2002**

(51) Int Cl.⁷: **H02M 1/12**, H02M 1/00, H02M 1/10, H05B 41/28

(86) Internationale Anmeldenummer:
**PCT/DE2002/002563**

(87) Internationale Veröffentlichungsnummer:
**WO 2003/067743 (14.08.2003 Gazette 2003/33)**

(54) **SCHALTUNGSANORDNUNG ZUR LEISTUNGSFAKTOR-KORREKTUR**

POWER FACTOR CORRECTION CIRCUIT

DISPOSITIF DE COMMUTATION POUR CORRIGER LE FACTEUR DE PUISSANCE

(84) Benannte Vertragsstaaten:
**AT BE BG CH CY CZ DE DK EE ES FI FR GB GR IE IT LI LU MC NL PT SE SK TR**

(30) Priorität: **08.02.2002 DE 10205516**

(43) Veröffentlichungstag der Anmeldung:
**03.11.2004 Patentblatt 2004/45**

(73) Patentinhaber: **Patent-Treuhand-Gesellschaft für elektrische Glühlampen mbH 81543 München (DE)**

(72) Erfinder:
• **STORM, Arwed 85221 Dachau (DE)**
• **MAYER, Siegfried 85452 Moosinning (DE)**

(56) Entgegenhaltungen:
**DE-A- 19 923 238        DE-A- 19 942 794**
**US-A- 4 683 529**

## Beschreibung

### Technisches Gebiet

Die vorliegende Erfindung betrifft eine Schaltungsanordnung zur LeistungsfaktorKorrektur.

Die Leistungsfaktor-Korrektur dient der Reduktion des Oberwellengehalts des Eingangsstromes einer Schaltungsanordnung. Je nach Leistungsaufnahme einer derartigen Schaltungsanordnung gelten hierfür bestimmte Anforderungen. Für Vorschaltgeräte mit einer Leistungsaufnahme von mehr als 25 W sind die Anforderungen beispielsweise in der Norm EN 61000-3-2, Teil A 14 geregelt.

### Stand der Technik

Eine aus dem Stand der Technik bekannte Schaltung zur Leistungsfaktorkorrektur ist in der DE 199 23 238.5 beschrieben. Der nächstliegende Stand der Tecknik ist aus der DE 199 42 794 bekannt geworden.

Weitere aus dem Stand der Technik bekannte Schaltungsanordnungen zur Leistungsfaktor-Korrektur bedienen sich der Ansteuerung eines Boost-Konverters mit integrierten Schaltkreisen, der festfrequenten Ansteuerung eines Boost-Konverters im lückenden Betrieb mit diskreten Bauteilen oder der Verwendung einer Ladungspumpe im Resonanzkreis eines nachgeschalteten Wandlers unter Verzicht auf einen vorgeschalteten Wandler zur Leistungsfaktor-Korrektur.

Der Nachteil der aus dem Stand der Technik bekannten Schaltungsanordnungen zur Leistungsfaktor-Korrektur mittels Ladungspumpe im Resonanzkreis besteht darin, dass diese insbesondere bei elektronischen Vorschaltgeräten mit höheren Leistungen zu hohen Blindströmen im Lastkreis führen. Der Nachteil der aus dem Stand der Technik bekannten Anordnung mit festfrequenter Ansteuerung im lückenden Betrieb besteht in einem ungünstigen Störspektrum gemäß der EN 55015.

Die Aufgabe der vorliegenden Erfindung besteht deshalb darin, eine Schaltungsanordnung zur Leistungsfaktor-Korrektur zur Verfügung zu stellen, die die genannten Nachteile nicht aufweist und die überdies kostengünstig zu realisieren ist.

### Darstellung der Erfindung

Diese Aufgabe wird erfindungsgemäß gelöst durch eine Schaltungsanordnung zur Leistungsfaktor-Korrektur mit den Merkmalen von Patentanspruch 1.

Der Erfindung liegt die Erkenntnis zugrunde, dass die oben bezeichnete Aufgabe gelöst werden kann durch den Aufbau eines selbstschwingenden Boost-Konverters im nicht lückenden Betrieb. Die Leistungsfaktor-Korrektur wird durch die konstante Einschaltzeit des zentralen Schaltelements bei Betrieb im Transition-Mode erfüllt. Die konstante Einschaltzeit sowie die für den Betrieb im Transition-Mode erforderliche Erkennung des Stromnulldurchgangs in der Induktivität wird mit einem minimalen Aufwand an Bauteilen realisiert. So wird mit dem ersten Kondensator zwischen der Arbeitselektrode des ersten Schaltelements und der Steuerelektrode des zweiten Schaltelements sowohl die konstante Einschaltzeit realisiert als auch das Abschalten des ersten Schaltelements im Nulldurchgang des Stroms in der Induktivität. Gleichzeitig bewirkt der erste Kondensator eine Mitkopplung in den Schaltphasen und reduziert somit die Schaltverluste durch steile Schaltflanken.

Die erfindungsgemäße Lösung bietet weiterhin den Vorteil, dass infolge des nicht lückenden Betriebs und der sich ergebenden Frequenzmodulation durch die Eingangsspannung die Anforderungen an die Bauteile einschließlich eines vorgeschalteten EMV-Filters minimiert werden. Wird die erfindungsgemäße Schaltungsanordnung zum Betreiben einer Lampe verwendet, insbesondere im Zusammenspiel mit einem Kaltstart-EVG, so führt die hohe Lampenimpedanz während der Glimmphase bei der erfindungsgemäßen Schaltungsanordnung nicht zu einer starken Erhöhung der Zwischenkreisspannung, wie dies jedoch bei den aus dem Stand der Technik bekannten Pumpschaltungen der Fall wäre.

Bevorzugt ist die Stromquelle, mit der die Steuerelektrode des ersten Schaltelements gekoppelt ist, entweder durch einen zweiten ohmschen Widerstand, der mit der ersten Anschlussklemme des Eingangs und/oder Ausgangs gekoppelt ist, oder durch eine separate Niederspannungsquelle mit Serienwiderstand realisiert.

Bevorzugt wird dem ersten ohmschen Widerstand und/oder dem zweiten Schaltelement ein Begrenzer-Netzwerk, beispielsweise realisiert durch eine erste Zenerdiode, parallel geschaltet, derart dass durch sie die Ausgangsspannung begrenzbar ist. Diese Maßnahme trägt dem Umstand Rechnung, dass bei der erfindungsgemäßen Schaltungsanordnung bei Lastabwurf, beispielsweise der Zündphase oder der Entfernung einer angeschlossenen Lampe während des Betriebs, die Ausgangsspannung umgekehrt proportional zur Last ansteigt. Die Parallelschaltung einer ersten Zenerdiode zu dem ersten ohmschen Widerstand verhindert dies, indem die Eingangsleistung beim Erreichen der Zenerspannung dieser ersten Zenerdiode soweit heruntergeregelt wird, dass die Ausgangsspannung der Schaltungsanordnung die Zenerspannung nicht überschreiten kann. Alternativ dazu kann die Ausgangsspannung mit einem Begrenzer-Netzwerk parallel zum zweiten Schaltelement abgeregelt oder die Schwingung beim Erreichen einer Ausgangs-Schwellspannung vollständig unterbunden werden.

Das erste Schaltelement kann einen nmos-Transistor und/oder das zweite Schaltelement einen npn-Transistor umfassen. Alternativ kann das erste Schaltelement einen pmos-Transistor und/oder das zweite Schaltelement einen pnp-Transistor umfassen.

Bevorzugt ist die Schaltungsanordnung derart ausgelegt, dass bei einem Nulldurchgang des Stroms durch die Induktivität das erste Schaltelement öffnet. Durch diese Maßnahme wird eine einfache Bedingung vorgegeben, um eine Schwingung zu starten. So bewirkt bereits der Nulldurchgang des Ladestroms, der beim Aufschalten der Eingangsspannung durch die Induktivität und die erste Diode in den Lastkreis fließt, das Anschwingen der Schaltung.

Bevorzugt ist zwischen die Steuerelektrode des zweiten Schaltelements und die erste Anschlussklemme des Eingangs ein dritter ohmscher Widerstand gekoppelt. Durch diesen zusätzlichen Pfad wird die Einschaltzeit im Bereich des Nulldurchgangs der Eingangsspannung verlängert, was sich günstig auf den Oberwellengehalt des Eingangsstroms auswirkt.

Bevorzugt kann auch zwischen die Steuerelektrode und die Bezugselektrode des zweiten Schaltelements die Serienschaltung aus einer zweiten Diode und einer zweiten Zenerdiode derart gekoppelt werden, dass die zweite Zenerdiode die Spannung zwischen Steuerelektrode und Bezugselektrode des zweiten Schaltelements in Sperrrichtung begrenzt. Die zweite Diode verhindert einen Strom in Flussrichtung der zweiten Zenerdiode. Die Sperrspannung der Zenerdiode bestimmt maßgeblich die Einschaltdauer des ersten Schaltelements und damit bei gegebener Last die Höhe der Ausgangsspannung. Bei Verzicht auf die beiden Dioden wird die Sperrspannung durch die negative Durchbruchspannung des Übergangs zwischen Steuerelektrode und Bezugselektrode des zweiten Schaltelements bestimmt.

Bevorzugt wird weiterhin die Steuerelektrode des ersten Schaltelements und die Arbeitselektrode des zweiten Schaltelements über eine dritte Zenerdiode mit dem Bezugspotential gekoppelt, wobei die dritte Zenerdiode derart angeordnet ist, dass durch sie die Steuerelektrode des ersten Schaltelements vor Überspannung geschützt werden kann.

Weitere vorteilhafte Ausführungsformen ergeben sich aus den Unteransprüchen.

**Kurze Beschreibung der Zeichnungen**

Im Nachfolgenden werden nunmehr Ausführungsbeispiele der Erfindung unter Bezugnahme auf die beigefügten Zeichnungen näher beschrieben. Es zeigen:

Figur 1 ein Prinzipschaltbild einer ersten Ausführungsform einer erfindungsgemäßen Schaltungsanordnung;

Figur 2 ein Prinzipschaltbild einer zweiten Ausführungsform einer erfindungsgemäßen Schaltungsanordnung;

Figur 3 in schematischer Darstellung die zeitlichen Verläufe verschiedener Signale der Figuren 1 und 2;

Figur 4 den gemessenen zeitlichen Verlauf dreier Signale eines realisierten Ausführungsbeispiels; und

Figur 5 den zu Figur 4 zugehörigen zeitlichen Verlauf des Eingangsstroms $i_e$.

Figur 6 ein Prinzipschaltbild einer dritten Ausführungsform einer erfindungsgemäßen Schaltungsanordnung.

Im Folgenden werden für gleiche und gleichwirkende Elemente der verschiedenen Ausführungsbeispiele durchweg gleiche Bezugszeichen verwendet.

**Bevorzugte Ausführung der Erfindung**

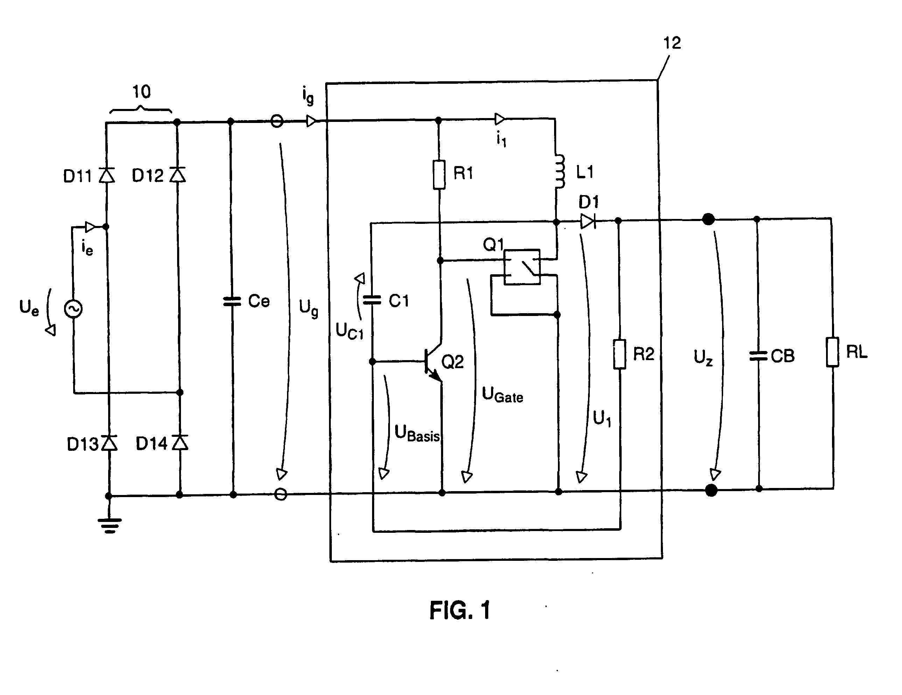

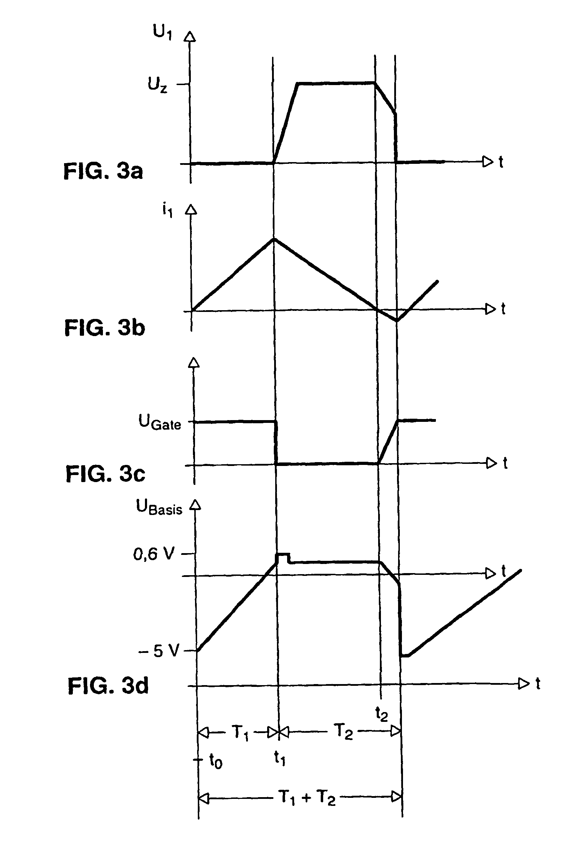

Zunächst wird auf die in Figur 1 dargestellte erfindungsgemäße Schaltungsanordnung Bezug genommen. Ohne Einschränkung der Anwendungsmöglichkeiten der erfindungsgemäßen Schaltungsanordnung, wird diese im Nachfolgenden am Beispiel der Ansteuerung eines elektronischen Vorschaltgeräts für eine Lampe dargestellt. Die zugehörigen prinzipiellen Signalverläufe können der Figur 3 entnommen werden.

Von einer Spannungsquelle, insbesondere einer Netzspannungsquelle, wird eine Spannung $u_e$ der erfindungsgemäßen Schaltungsanordnung 12 zur Verfügung gestellt. Sie liefert zunächst einen Strom $i_e$ an ein Gleichrichternetzwerk 10, das vier Dioden D11, D12, D13, D14 umfasst. Die am Ausgang des Gleichrichternetzwerks 10 zur Verfügung gestellte Spannung $u_g$ wird durch einen Kondensator $C_e$ stabilisiert und der erfindungsgemäßen Schaltungsanordnung 12 zur Leistungsfaktor-Korrektur zugeführt.

Der Kondensator $C_1$ sei zum Zeitpunkt $t_0$ auf die negative Basis-Emitter-Durchbruchspannung des Transistors $Q_2$ geladen. Damit sperrt der Transistor $Q_2$ und der Transistor $Q_1$ ist über einen Pull-Up-Widerstand $R_1$ leitend, das heißt die Spannung $u_1$ am Drainanschluss des Transistors $Q_1$ ist Null. Der Strom $i_1$ durch die Induktivität $L_1$ sei zum Zeitpunkt $t_0$ ebenfalls gleich Null. Die Ausgangsspannung $u_z$ an der Last $R_L$ sei konstant, beispielsweise aufgrund Stützung durch einen hinreichend großen Bulk-Kondensator $C_B$.

Der Kondensator $C_1$ wird nun über $R_2$ in der Zeit $T_1 = t_1 - t_0$ umgeladen, wobei sich $T_1$ ergibt aus

$$du_{C1}/T_1 = 1/C_1 * (u_z/R_2). \qquad (1)$$

Während des Zeitintervalls $T_1$ steigt der Strom $i_1$ in der Induktivität $L_1$ linear an. Die Steigung der Stromrampe errechnet sich aus

$$i_{1,max}/T_1 = 1/L_1 * u_g, \qquad (2)$$

wobei $u_g$ die Eingangsspannung der erfindungsgemäßen Schaltungsanordnung darstellt.

Zum Zeitpunkt $t_1$ erreicht die Spannung $u_{Basis}$ von Transistor $Q_2$ die Durchlassspannung und schaltet den Transistor $Q_2$ ein. Damit wird die Spannung $u_{Gate}$ von Transistor $Q_1$ zu Null und der Transistor $T_1$, vorliegend beispielhaft ein MOS-FET, sperrt. Zum Zeitpunkt $t_1$ kommutiert der Strom $i_1$ durch die Induktivität $L_1$ zunächst auf den Kondensator $C_1$ und lädt diesen auf die Ausgangsspannung $u_z$ um. Anschließend kommutiert der Strom $i_1$ auf die Gleichrichter-Diode $D_1$ und speist somit den Ausgangskreis. Bis zum Zeitpunkt $t_2$ nimmt der Strom $i_1$ in der Induktivität $L_1$ linear ab. Die Steigung der negativen Stromrampe lässt sich berechnen aus

$$i_{1,max}/T_2 = 1/L_1 * (u_g-u_z), \qquad (3)$$

wobei unter Vernachlässigung einer Einschaltzeit des Transistors T1 gilt: $T_2 = t_2 - t_1$. Zum Zeitpunkt $t_2$ ist der Stromnulldurchgang in der Diode $D_1$ erreicht, vergleiche Figur 3 b), und die Diode $D_1$ sperrt. Der Kondensator $C_1$ entlädt sich über die Induktivität $L_1$ und räumt auf diese Weise die Basis des Transistors $Q_2$ aus. Damit sperrt der Transistor $Q_2$ und die Spannung $u_{Gate}$ am Gate von Transistor $Q_1$ wird über den Pull-Up-Widerstand $R_1$ hochgezogen. Damit schaltet $Q_1$ ein und zieht die Spannung $u_1$ an seinem Drain auf Null. Der Kondensator $C_1$ wird über den Drain-Source-Übergang des Transistors $Q_1$ bis zur negativen Basis-Emitter-Durchbruchspannung des Transistors $Q_2$ entladen. Diese Mitkopplung ermöglicht eine schnelle Abschaltung des Transistors $Q_1$ und minimiert auf diese Weise die Schaltverluste. Damit ist der Zustand zum Zeitpunkt $t_0$ erreicht und der Zyklus beginnt von vorn.

Durch die erfindungsgemäße Schaltungsanordnung wird dafür gesorgt, dass die Zeit $T_1 = t_1-t_0$ unabhängig von der Eingangsspannung $u_g$, und damit unabhängig von der Spannung $u_e$ konstant ist. Aus Gleichung (2) lässt sich unmittelbar ablesen, dass in diesem Fall $i_{1,max}$ proportional zur Eingangsspannung $u_g$ ist. Weiterhin ist der Effektivwert des Stroms $i_1$ gleich dem Wirkanteil des Eingangsstroms $i_g$. Im nicht lückenden Betrieb ist der Spitzenwert des Stroms $i_1$ in der Induktivität $L_1$ gemäß der Gleichung

$$i_{1,max} = \sqrt{3} * i_g \qquad (4)$$

proportional zum Eingangsstrom $i_g$. Durch das Schaltungsprinzip, bei dem der Transistor $Q_1$ im Nulldurchgang des Stroms $i_1$ zum Zeitpunkt $t_2$ wieder geöffnet wird, ist ein nicht lückender Betrieb vorgegeben. Die Bedingung für die Leistungsfaktor-Korrektur lautet:

$$u_e \sim i_e \qquad (5)$$

und ist aus (3) und (4) mit $u_g = |u_e|$ und $i_g= |i_e|$, somit durch die erfindungsgemäße Schaltungsanordnung, erfüllt.

Zum Start der Schwingung:

Nach dem Anlegen einer Spannung $u_g$ wird der Kondensator $C_1$ über die Induktivität $L_1$ und die Diode $D_1$ geladen. Über den Widerstand $R_2$ wird die Basis des Transistors $Q_2$ während des Aufbaus der Ausgangsspannung $u_z$ angesteuert, wodurch der Transistor $Q_2$ leitet. Damit ist die Spannung $u_{Gate}$ am Gate des Transistors $Q_1$ gleich Null und sperrt in dieser Phase den Transistor $Q_1$.

Nach dem Umladen des Kondensators $C_1$ beim Erreichen des ersten Spannungsscheitelwertes der Eingangsspannung geht der Strom $i_1$ durch die Induktivität $L_1$ durch Null. Wie oben bereits ausgeführt, führt dies zum Umladen des Kondensators $C_1$ und zum Start eines Zyklus gemäß Figur 3. Die erfindungsgemäße Schaltungsanordnung schwingt somit nach dem Aufschalten der Eingangsspannung selbständig an.

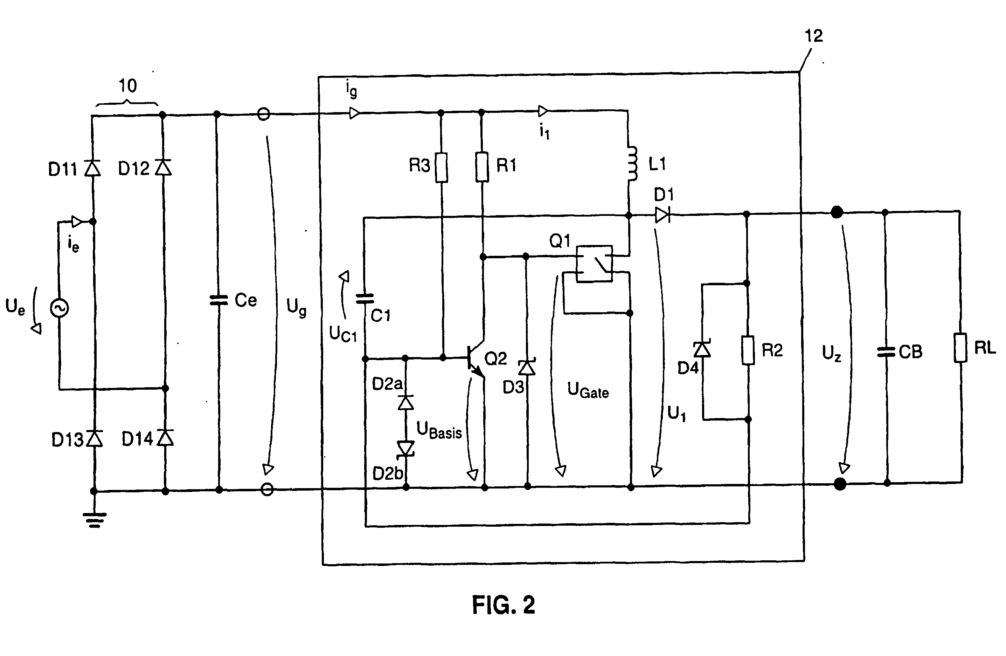

Mit Bezug auf die in Figur 2 dargestellte Ausführungsform einer erfindungsgemäßen Schaltungsanordnung werden im Folgenden weitere Ausgestaltungen des erfindungsgemäßen Schaltungsprinzips beschrieben: Die Zeit $T_2$ nimmt mit steigender Ausgangsspannung $u_z$ umgekehrt proportional ab. Damit wird die Eingangsleistung mit steigender Ausgangsspannung $u_z$ zurückgeregelt, was für die Schaltungsanordnung vorteilhaft ist. Um die Ausgangsspannung $u_z$ bei einer ohmschen Last vollständig auszuregeln, müsste die Eingangsleistung jedoch mit einer Proportionalität zum Quadrat der Ausgangsspannung $u_z$ zurückgeregelt werden. Dies bedeutet, dass die Ausgangsspannung $u_z$ bei Lastabwurf, beispielsweise bei der Zündphase einer Lampe oder der Entfernung einer Lampe während des Betriebs, dennoch umgekehrt proportional zur Last ansteigt. Um dies zu verhindern, kann eine Zenerdiode $D_4$ eingeführt werden. Diese liegt parallel zum ohmschen Widerstand $R_2$ und begrenzt die Ausgangsspannung $u_z$, indem die Zeit $T_1$ und damit die Eingangsleistung beim Erreichen der Zenerspannung an der Zenerdiode $D_4$ soweit heruntergeregelt werden, dass die Ausgangsspannung $u_z$ die Zenerspannung der Diode $D_4$ nicht überschreiten kann.

Zwischen die Steuerelektrode des zweiten Transistors $Q_2$ und die erste Anschlussklemme des Eingangs ist ein ohmscher Widerstand $R_3$ gekoppelt. Mit diesem Widerstand lässt sich der Oberwellengehalt des Eingangsstroms weiter reduzieren, da der Wandler andernfalls im Bereich des Nulldurchgangs der Eingangsspannung bei zu kurzen Einschaltintervallen keine Leistung übertragen kann.

Durch den nicht lückenden Betrieb der erfindungsgemäßen Schaltungsanordnung wird die Strom-Amplitude des Stroms $i_1$ auf $i_{1,max} \sqrt{3}*i_g$ begrenzt. Dadurch vermindern sich die Anforderungen an die Bauteile, insbesondere an die Sättigung der Induktivität $L_1$.

Die Schaltfrequenz f beträgt bei der erfindungsgemäßen Schaltungsanordnung $f = 1/(T_1+T_2)$. Da $T_2$ gemäß Gleichung (3) von der Eingangsspannung $u_g$ abhängig ist, wird das Spektrum der leitungsgebundenen Störabstrahlung bei Betrieb an der Netzspannung $u_e$ verschliffen. Die niedrigste Frequenz wird bei hohen Eingangsspannungen $u_g$ erreicht. Da bei hohen Eingangsspannungen die höchsten Ströme $i_1$ in der Induktivität $L_1$ abgeschaltet werden müssen, kann die Schaltung so dimensioniert werden, dass diese Frequenz unterhalb dem Sprung in der Bewertungskurve bei 50 kHz liegt.

Gemäß Gleichung (1) legt der Kondensator $C_1$ zusammen mit dem ohmschen Widerstand $R_2$ die Zeitkonstante $T_1$ fest. Der Kondensator $C_1$ hat in der erfindungsgemäßen Schaltungsanordnung jedoch noch weitere vorteilhafte Funktionen:

- Der Kondensator $C_1$ ermöglicht ein schnelles Ausräumen der Basis des Transistors $Q_2$ zum Zeitpunkt $t_2$ durch Mitkopplung in der Schaltphase.

- Umgekehrt unterstützt der Kondensator $C_1$ zum Zeitpunkt $t_1$ ebenfalls durch den Mitkoppeleffekt das Einschalten des Transistors $Q_2$ und damit ein "hartes" Abschalten des Transistors $Q_1$. Je nach Dimensionierung kann es erforderlich sein, die Basis des Transistors $Q_2$ zwei Dioden $D_{2a}$, $D_{2b}$, siehe Figur 2, parallel zur Basis-Emitter-Strecke des Transistors $Q_2$ gegen Überstrom beim Umladen des Kondensators $C_1$ zu schützen. Die Zenerdiode $D_{2b}$ begrenzt die negative Basis-Emitter-Spannung des Transistors $Q_2$. Damit ist die Zeit $T_1$ unabhängig von Bauteilstreuungen und Temperaturverhalten der Durchbruchspannung des Transistors $Q_2$.

- Der Kondensator $C_1$ begrenzt die Flankensteilheit beim Umschwingen der Spannung an der Induktivität $L_1$.

In vorteilhafter Weise klemmt der Transistor $Q_2$ das Gate des Transistors $Q_1$ "hart" auf Null Volt. Dies ist erforderlich, um die Gate-Kapazität des Transistors $Q_1$ schnell umzuladen und ein schnelles Abschalten des Transistors $Q_1$ zu bewirken. Damit lassen sich außerdem die Schaltverluste im Transistor $Q_1$ gering halten. Umgekehrt wird der Transistor $Q_1$ über den Pull-Up-Widerstand $R_1$ eingeschaltet. Dies kann "weich" erfolgen, da sich der Strom $i_1$ in der Induktivität $L_1$ zu diesem Zeitpunkt erst von Null beginnend aufbauen muss.

Um das Gate in der vorliegenden Schaltung gegen Überspannung zu schützen, kann eine Zenerdiode $D_3$, siehe Figur 2, zwischen den Gate-Anschluss und das Bezugspotential für den Transistor $Q_1$ geschaltet werden.

Bei einer vorteilhaften Weiterbildung der Erfindung ist der Pull-Up-Widerstand $R_1$ an eine interne Niederspannungsversorgung angeschlossen. Damit kann die Zenerdiode $D_3$ entfallen. Weiterhin entfallen durch diese Maßnahme die hohen Spannungsanforderungen an den Widerstand $R_1$.

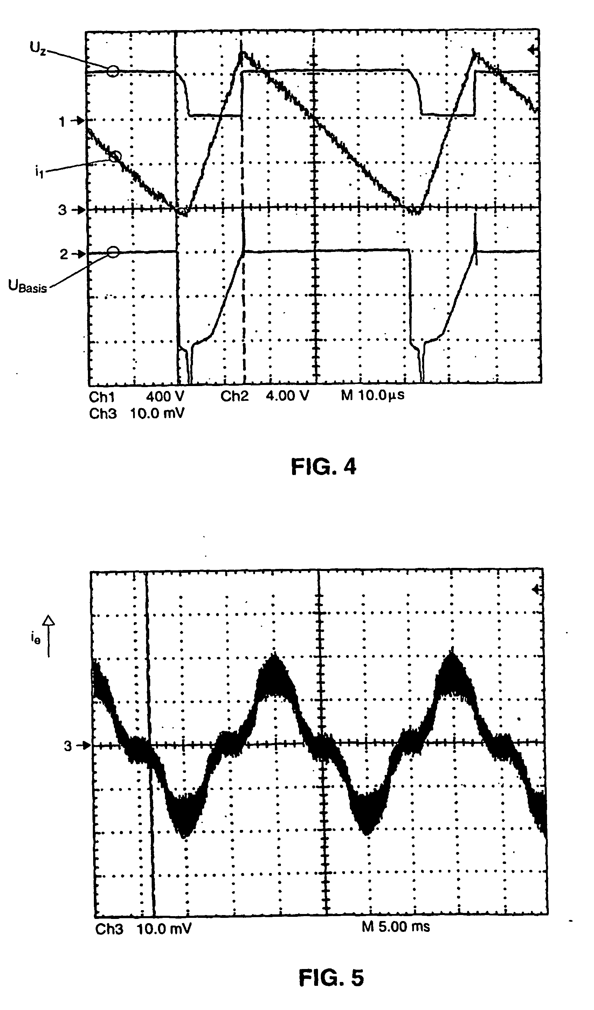

Figur 4 zeigt den zeitlichen Verlauf der Ausgangsspannung $u_z$ des Stroms $i_1$ und der Spannung $u_{Basis}$ an der Basis des Transistors $Q_2$ über der Zeit bei einem Versuchsaufbau einer erfindungsgemäßen Schaltungsanordnung. Die Spannungsspitzen in den Verläufen der Spannungen $u_z$ und $u_{Basis}$ resultieren aus den Umladeströmen des Kondensators $C_1$ und führen zu Verlusten im Transistor $Q_2$, sofern sie nicht über optional einzufügende Dioden $D_{2a}$ und $D_{2b}$ abgeleitet werden.

Figur 5 zeigt den zeitlichen Verlauf des Eingangsstroms $i_e$ bei Ansteuerung aus einer sinusförmigen Netzspannung $u_e$. Im Bereich des Nulldurchgangs der Netzspannung $u_e$ erreicht die Spannung an der Induktivität $L_1$ nicht mehr die Ausgangsspannung $u_z$. Damit ist in diesem Bereich für eine sehr geringe Zeit keine Leistungsübertragung möglich. Diese Stromverzerrungen resultieren in einem Oberwellenanteil, der je nach Anforderungen toleriert werden kann. Durch den zusätzlich eingebrachten dritten Widerstand $R_3$ zwischen der Basis des Transistors $Q_2$ und der gleichgerichteten Eingangsspannung kann dieser Effekt weitgehend kompensiert werden.

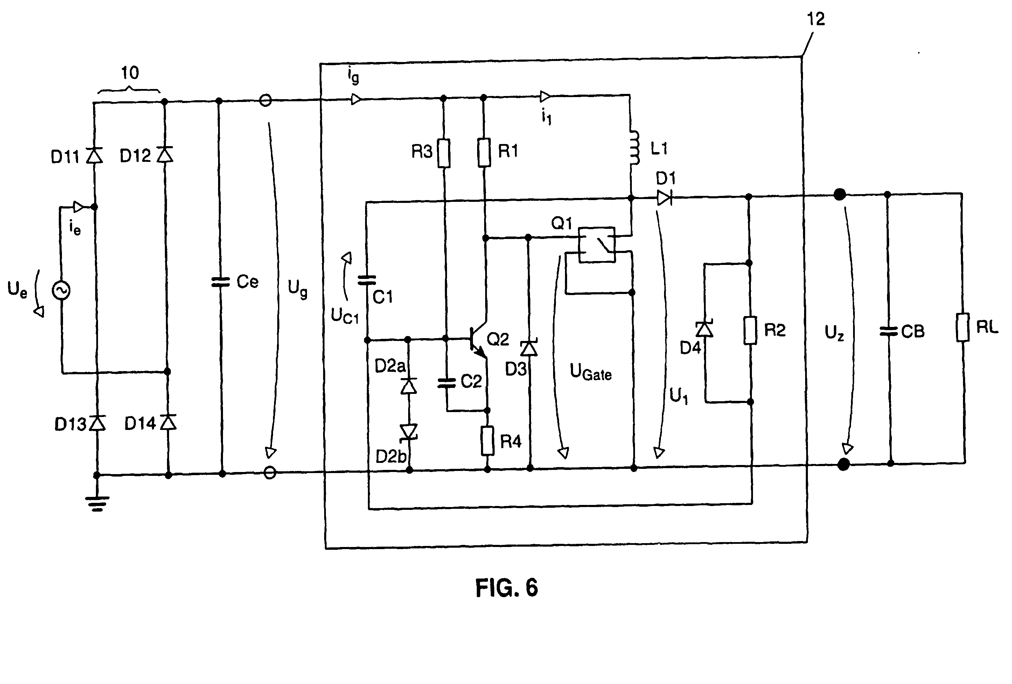

In Figur 6 ist ein weiteres Ausführungsbeispiel für die Erfindung dargestellt. Im Unterschied zu Figur 2 ist zwischen die Steuerelektrode und die Bezugselektrode des zweiten Schaltelements Q2 ein zweiter Kondensators C2 geschaltet. Zudem ist die Bezugselektrode des zweiten Schaltelements Q2 über einen vierten Widerstand R4 mit dem Bezugspotenzial verbunden. Durch den zweiten Kondensator C2 wird ein Nachteil beseitigt, der durch die Mehrfachfunktion des ersten Kondensators C1 entsteht. Zum einen bestimmt der Wert des ersten Kondensators C1 die Einschaltzeit T1 des ersten Schaltelements Q1, zum anderen stellt der erste Kondensator C1 die Mitkopplung dar, die die Oszillation der gesamten Schaltungsanordnung aufrecht erhält. In der Praxis treten am ersten Kondensator C1 Spannungsänderungen von mehreren hundert Volt auf. Zusammen mit dem gewünschten Wert des ersten Kondensators C1 resultieren unerwünscht hohe Lade- und Entladeströme, die hohe Bauteilbelastungen mit sich bringen. Durch den zweiten Kondensator wird erfindungsgemäß die Mehrfachfunktion des ersten Kondensators C1 aufgehoben. Der Wert des zweiten Kondensators C2 wird so gewählt, dass er wesentlich die Einschaltzeit T1 des ersten Schaltelements Q1 bestimmt. Der Wert des ersten Kondensators C1 kann nun so klein gewählt werden, dass lediglich seine Mitkoppelfunktion noch aufrecht erhalten wird. Damit können die o. g. Lade- und Entladeströme reduziert werden. Über den Wert des vierten Widerstandes R4 besteht eine weitere Möglichkeit sowohl die Mitkoppelfunktion des ersten Kondensators C1 als auch die Einschaltzeit T1 des ersten Schaltelements Q1 zu beeinflussen. Damit ist ein Feinabgleich möglich. Der Wert des vierten Widerstandes R4 kann aber auch Null sein.

Zusammenfassend ergeben sich durch die erfindungsgemäße Schaltungsanordnung insbesondere die folgenden Vorteile:

- ein prinzipbedingtes Ausräumen der Transistoren, bewirkt durch die Mitkopplung durch den Kondensator $C_1$ beim Abschalten des Transistors $Q_1$, ermöglicht ein verlustarmes Schalten hoher Ströme;

- der Kondensator $C_1$ bzw. die Kondensatoren $C_1$ und $C_2$ sind für die Bemessung der Zeitdauer $T_1$ zuständig und bewirken gleichzeitig das Abschalten des Transistors $Q_1$ im Nulldurchgang des Stroms $i_1$ in der Induktivität $L_1$;

- der Kondensator $C_1$ bzw. die Kondensatoren $C_1$ und $C_2$ ermöglichen ein "weiches" Kommutieren des Stroms $i_1$ zum Zeitpunkt $t_1$;

- die Variation der Ausgangsspannung uz infolge einer Lastvariation wird teilweise, das heißt linear statt quadratisch, ausgeregelt durch die Abhängigkeit der Zeitdauer T 1 von der Ausgangsspannung uz.

## Patentansprüche

1. Schaltungsanordnung zur Leistungsfaktor-Korrektur mit

   - einem Eingang, an den eine Eingangsspannung ($u_g$) anschließbar ist, wobei der Eingang eine erste und eine zweite Anschlussklemme umfasst ;

   - einem ersten Schaltelement ($Q_1$) mit einer Steuerelektrode, einer Bezugselektrode und einer Arbeitselektrode, wobei die Steuerelektrode mit einer Stromquelle und die Bezugselektrode an ein Bezugspotential gekoppelt ist;

   - einer Induktivität ($L_1$), die zwischen die Arbeitselektrode des ersten Schaltelements ($Q_1$) und die erste Anschlussklemme des Eingangs gekoppelt ist;

   - einem Ausgang, an dem eine Ausgangsspannung ($u_z$) bereitstellbar ist, wobei der Ausgang eine erste und eine zweite Ausgangsklemme umfasst;

   - einer ersten Diode ($D_1$), die zwischen die Arbeitselektrode des ersten Schaltelements ($Q_1$) und die erste Ausgangsklemme des Ausgangs gekoppelt ist;

   - einem zweiten Schaltelement ($Q_2$) mit einer Steuerelektrode, einer Bezugselektrode und einer Arbeitselektrode, wobei die Bezugselektrode mit dem Bezugspotential und die Arbeitselektrode mit der Steuerelektrode des ersten Schaltelements ($Q_1$) gekoppelt sind;

   - einem ersten Kondensator ($C_1$), der zwischen die Steuerelektrode des zweiten Schaltelements ($Q_2$) und die Arbeitselektrode des ersten Schaltelements ($Q_1$) gekoppelt ist; und

   - einem ersten ohmschen Widerstand ($R_2$), der zwischen der ersten Anschlussklemme des Ausgangs und der Steuerelektrode des zweiten Schaltelements ($Q_2$) gekoppelt ist.

2. Schaltungsanordnung nach Anspruch 1, **dadurch gekennzeichnet,** **dass** die Stromquelle, mit der die Steuerelektrode des ersten Schaltelements ($Q_1$) gekoppelt ist, durch einen zweiten ohmschen Widerstand ($R_1$) realisiert ist, der mit der ersten Anschlussklemme des Eingangs gekoppelt ist.

3. Schaltungsanordnung nach Anspruch 1, **dadurch gekennzeichnet,** **dass** die Stromquelle, mit der die Steuerelektrode des ersten Schaltelements ($Q_1$) gekoppelt ist, durch eine separate Niederspannungsquelle mit hoher Impedanz realisiert ist.

4. Schaltungsanordnung nach einem der vorhergehenden Ansprüche, **dadurch gekennzeichnet,** **dass** dem ersten ohmschen Widerstand ($R_2$) eine erste Zenerdiode ($D_4$) parallelgeschaltet ist, derart, dass durch sie die Ausgangsspannung ($u_z$) begrenzbar ist.

5. Schaltungsanordnung nach einem der vorhergehenden Ansprüche, **dadurch gekennzeichnet,** **dass** das erste Schaltelement ($Q_1$) einen nmos-Transistor und/oder das zweite Schaltelement ($Q_2$) einen npn-Transistor umfasst.

6. Schaltungsanordnung nach einem der Ansprüche 1 bis 5, **dadurch gekennzeichnet,** **dass** das erste Schaltelement ($Q_1$) einen pmos-Transistor und/oder das zweite Schaltelement ($Q_2$) einen pnp-Transistor umfasst.

**7.** Schaltungsanordnung nach einem der vorhergehenden Ansprüche,
**dadurch gekennzeichnet,**
**dass** die Schaltungsanordnung derart ausgelegt ist, dass bei einem Nulldurchgang des Stroms ($i_1$) durch die Induktivität ($L_1$) das erste Schaltelement ($Q_1$) öffnet.

**8.** Schaltungsanordnung nach einem der vorhergehenden Ansprüche,
**dadurch gekennzeichnet,**
**dass** zwischen die Steuerelektrode des zweiten Schaltelements ($Q_2$) und die erste Anschlussklemme des Eingangs ein dritter ohmscher Widerstand ($R_3$) gekoppelt ist.

**9.** Schaltungsanordnung nach einem der Ansprüche 1 bis 8,
**dadurch gekennzeichnet,**
**dass** zwischen die Steuerelektrode und die Bezugselektrode des zweiten Schaltelements ($Q_2$) die Serienschaltung aus einer zweiten Diode ($D_{2a}$) und einer zweiten Zenerdiode ($D_{2b}$) gekoppelt ist, derart, dass die zweite Zenerdiode ($D_{2b}$) die Spannung zwischen der Steuerelektrode und der Bezugselektrode des zweiten Schaltelements ($Q_2$) in Sperrrichtung begrenzt und die zweite Diode ($D_{2a}$) einen Kurzschluss der Steuerelektrode des zweiten Schaltelements ($Q_2$) gegen dessen Bezugselektrode durch dei zweite Zenerdiode ($D_{2b}$) verhindert.

**10.** Schaltungsanordnung nach einem der vorhergehenden Ansprüche,
**dadurch gekennzeichnet,**
**dass** die Steuerelektrode des ersten Schaltelements ($Q_1$) und die Arbeitselektrode des zweiten Schaltelements ($Q_2$) über eine dritte Zenerdiode ($D_3$) mit dem Bezugspotential gekoppelt sind, wobei die dritte Zenerdiode ($D_3$) derart angeordnet ist, dass durch sie die Steuerelektrode des ersten Schaltelements ($Q_1$) vor Überspannung schützbar ist.

**11.** Schaltungsanordnung nach einem der vorhergehenden Ansprüche,
**dadurch gekennzeichnet,**
**dass** zwischen die Steuerelektrode des zweiten Schaltelements ($Q_2$) und die Bezugselektrode des zweiten Schaltelements ($Q_2$) ein zweiter Kondensator (C2) geschaltet ist, dessen Wert so groß ist, dass damit die Einschaltzeit (T1) des ersten Schaltelements (Q1) wesentlich beeinflussbar ist.

**Claims**

**1.** Circuit arrangement for power factor correction having

- an input, to which an input voltage ($u_g$) can be connected, the input comprising a first and a second connection terminal;

- a first switching element ($Q_1$) having a control electrode, a reference electrode and a working electrode, the control electrode being coupled to a current source and the reference electrode being coupled to a reference potential;

- an inductance ($L_1$), which is coupled between the working electrode of the first switching element ($Q_1$) and the first connection terminal of the input;

- an output, at which an output voltage ($u_z$) can be provided, the output comprising a first and a second output terminal;

- a first diode ($D_1$), which is coupled between the working electrode of the first switching element ($Q_1$) and the first output terminal of the output;

- a second switching element ($Q_2$) having a control electrode, a reference electrode and a working electrode, the reference electrode being coupled to the reference potential, and the working electrode being coupled to the control electrode of the first switching element ($Q_1$);

- a first capacitor ($C_1$), which is coupled between the control electrode of the second switching element ($Q_2$) and the working electrode of the first switching element ($Q_1$); and

- a first nonreactive resistor ($R_2$), which is coupled between the first connection terminal of the output and the control electrode of the second switching element ($Q_2$).

**2.** Circuit arrangement according to Claim 1, **characterized in that** the current source, to which the control electrode of the first switching element ($Q_1$) is coupled, is realized by a second nonreactive resistor ($R_1$) which is coupled to the first connection terminal of the input.

**3.** Circuit arrangement according to Claim 1, **characterized in that** the current source, to which the control electrode of the first switching element ($Q_1$) is coupled, is realized by a separate low-voltage source having a high impedance.

**4.** Circuit arrangement according to one of the preceding claims, **characterized in that** a first zener diode ($D_4$) is connected in parallel with the first nonreactive resistor ($R_2$) such that it can be used to limit the output voltage ($u_z$).

**5.** Circuit arrangement according to one of the preceding claims, **characterized in that** the first switching element ($Q_1$) comprises an nmos transistor, and/or the second switching element ($Q_2$) comprises an npn transistor.

**6.** Circuit arrangement according to one of Claims 1 to 5, **characterized in that** the first switching element ($Q_1$) comprises a pmos transistor, and/or the second switching element ($Q_2$) comprises a pnp transistor.

**7.** Circuit arrangement according to one of the preceding claims, **characterized in that** the circuit arrangement is designed such that, during a zero crossing of the current ($i_1$) through the inductance ($L_1$), the first switching element ($Q_1$) opens.

**8.** Circuit arrangement according to one of the preceding claims, **characterized in that** a third nonreactive resistor ($R_3$) is coupled between the control electrode of the second switching element ($Q_2$) and the first connection terminal of the input.

**9.** Circuit arrangement according to one of Claims 1 to 8, **characterized in that** the series circuit comprising a second diode ($D_{2a}$) and a second zener diode ($D_{2b}$) is coupled between the control electrode and the reference electrode of the second switching element ($Q_2$) such that the second zener diode ($D_{2b}$) limits the voltage between the control electrode and the reference electrode of the second switching element ($Q_2$) in the reverse direction, and the second diode ($D_{2a}$) prevents a short circuit of the control electrode of the second switching element ($Q_2$) with respect to its reference electrode by means of the second zener diode ($D_{2b}$).

**10.** Circuit arrangement according to one of the preceding claims, **characterized in that** the control electrode of the first switching element ($Q_1$) and the working electrode of the second switching element ($Q_2$) are coupled to the reference potential by means of a third zener diode ($D_3$), the third zener diode ($D_3$) being arranged such that it can be used to protect the control electrode of the first switching element ($Q_1$) against overvoltages.

**11.** Circuit arrangement according to one of the preceding claims, **characterized in that** a second capacitor (C2) is connected between the control electrode of the second switching element ($Q_2$) and the reference electrode of the second switching element ($Q_2$), and the value for the second capacitor (C2) is so great that it can be used to substantially influence the On time (T1) of the first switching element (Q1).

**Revendications**

**1.** Montage de correction du facteur de puissance, comprenant

- une entrée à laquelle peut être appliquée une tension ($u_g$) d'entrée, l'entrée comprenant une première et une deuxième borne de connexion ;
- un premier élément ($Q_1$) de commutation ayant une électrode de commande, une électrode de référence et une électrode de travail, l'électrode de commande étant couplée à une source de courant et l'électrode de référence à un potentiel de référence ;
- une inductance ($L_1$) qui est montée entre l'électrode de travail du premier élément ($Q_1$) de commutation et la première borne de connexion de l'entrée ;
- une sortie à laquelle est disponible une tension ($u_z$) de sortie, la sortie comprenant une première et une deuxième borne de sortie ;
- une première diode ($D_1$) qui est montée entre l'électrode de travail du premier élément ($Q_1$) de commutation et la première borne de sortie de la sortie ;
- un deuxième élément ($Q_2$) de commutation ayant une électrode de commande, une électrode de référence et une électrode de travail, l'électrode de référence étant couplée au potentiel de référence et l'électrode de travail à l'électrode de commande du premier élément ($Q_1$) de commutation ;
- un premier condensateur ($C_1$) qui est monté entre l'électrode de commande du deuxième élément ($Q_2$) de commutation et l'électrode de travail du premier élément ($Q_1$) de commutation ; et
- une première résistance ($R_2$) ohmique qui est montée entre la première borne de connexion de la sortie et l'électrode de commande du deuxième élément ($Q_2$) de commutation.

**2.** Montage suivant la revendication 1,
   **caractérisé**
   **en ce que** la source de courant à laquelle est couplée l'électrode de commande du premier élément ($Q_1$) de commutation est réalisée par une deuxième résistance ($R_1$) ohmique qui est couplée à la première borne de connexion de l'entrée.

**3.** Montage suivant la revendication 1,
   **caractérisé**
   **en ce que** la source de courant à laquelle est couplée l'électrode de commande du premier élément ($Q_1$) de commutation est réalisée par une source de basse tension distincte de grande impédance.

**4.** Montage suivant l'une des revendications précédentes,
> **caractérisé**
> **en ce qu'**avec la première résistance (R₂) ohmique, est monté en parallèle une première diode (D₄) Zener, de façon à ce qu'elle puisse limiter la tension (u_z) de sortie.

**5.** Montage suivant l'une des revendications précédentes,
> **caractérisé**
> **en ce que** le premier élément (Q₁) de commutation comprend un transistor nmos et/ou le deuxième élément (Q₂) de commutation un transistor npn.

**6.** Montage suivant l'une des revendications 1 à 5,
> **caractérisé**
> **en ce que** le premier élément (Q₁) de commutation comprend un transistor pmos et/ou le deuxième élément (Q₂) de commutation un transistor pnp.

**7.** Montage suivant l'une des revendications précédentes,
> **caractérisé**
> **en ce que** le montage est conçu de façon à ce que, lors d'un passage par zéro du courant (i₁) dans l'inductance (L₁), le premier élément (Q₁) de commutation s'ouvre.

**8.** Montage suivant l'une des revendications précédentes,
> **caractérisé**
> **en ce qu'**une troisième résistance (R₃) ohmique est montée entre l'électrode de commande du deuxième élément (Q₂) de commutation et la première borne de connexion de l'entrée.

**9.** Montage suivant l'une des revendications 1 à 8,
> **caractérisé**
> **en ce qu'**entre l'électrode de commande et l'électrode de référence du deuxième élément (Q₂) de commutation, le circuit série est constitué d'une deuxième diode (D₂ₐ) et d'une deuxième diode Zener (D₂ᵦ) et est monté de façon à ce que la deuxième diode Zener (D₂ᵦ) limite la tension entre l'électrode de commande et l'électrode de référence du deuxième élément (Q₂) de commutation dans le sens bloqué et de façon à ce que la deuxième diode (D₂ₐ) empêche par la deuxième diode Zener (D₂ᵦ) un court-circuit de l'électrode de commande du deuxième élément (Q₂) de commutation par rapport à son électrode de référence.

**10.** Montage suivant l'une des revendications précédentes,
> **caractérisé**
> **en ce que** l'électrode de commande du premier élément (Q₁) de commutation et l'électrode de travail du deuxième élément (Q₂) de commutation sont couplées au potentiel de référence par l'intermédiaire d'une troisième diode Zener (D₃), la troisième diode Zener (D₃) étant disposée de façon à ce qu'elle puisse protéger d'une surtension l'électrode de commande du premier élément (Q₁) de commutation.

**11.** Montage suivant l'une des revendications précédentes,
> **caractérisé**
> **en ce qu'**il est monté, entre l'électrode de commande du deuxième élément (Q₂) de commutation et l'électrode de référence du deuxième élément (Q₂) de commutation, un deuxième condensateur (C₂) dont la valeur est si grande que l'on peut ainsi influer sensiblement sur le temps de mise à l'état passant du premier élément (Q₁) de commutation.

**FIG. 1**

EP 1 472 776 B1

**FIG. 2**

EP 1 472 776 B1

FIG. 3a

FIG. 3b

FIG. 3c

FIG. 3d

FIG. 4

FIG. 5

FIG. 6